# EUROPEAN PATENT APPLICATION

(11) **EP 4 104 904 A1**
(43) Date of publication of application: **21.12.2022**
(21) Application number: 21217208.4
(22) Date of filing: 22.12.2021
(51) Int. Cl.: A62C 3/07, A62C 3/16

(54) **APPARATUS FOR EXTINGUISHING FIRE OF ELECTRIC VEHICLE AND ELECTRIC VEHICLE HAVING THE SAME**

(30) Priority: 16.06.2021 KR 20210077863
(71) Applicant: National Fire Research Institute, Chungcheongnam-do 31555 (KR)
(72) Inventor: CHAE, Sang Soo, 54850 Jeollabuk-do (KR); KIM, Hong Sik, 18427 Gyeonggi-do (KR); LEE, Jae Hun, 31168 Chungcheongnam-do (KR); PARK, Jong Young, 28382 Chungcheongbuk-do (KR)
(74) Representative: Schmitt-Nilson Schraud Waibel Wohlfrom Patentanwälte Partnerschaft mbB

(57) **Abstract**

An apparatus for extinguishing a fire of an electric vehicle and the electric vehicle including the same are provided. The apparatus includes a waterway pipe provided on a cover of a battery pack mounted inside the electric vehicle, and a fire water pipe provided outside the battery pack inside the electric vehicle, and having one end connected with the waterway pipe and an opposite end connected with a fire hose on a vehicle body of the electric vehicle.

## Description

### CROSS-REFERENCE TO RELATED APPLICATIONS

A claim for priority is made to Korean Patent Application No. 10-2021-0077863 filed on JUN. 16, 2021, in the Korean Intellectual Property Office, the entire contents of which are hereby incorporated by reference.

### BACKGROUND

Embodiments of the inventive concept described herein relate to a technology of extinguishing a fire of an electric vehicle.

Recently, as an electric vehicle using a battery is increased, the fire incident of the electric vehicle has been increased. When a fire occurs in th electric vehicle, firefighters have surpassed the fire by spraying water into the electric vehicle. However, a battery positioned on an interior floor of a vehicle may be exploded and flames may be erupted. Accordingly, the firefighters have supplied water at a specific distance to the electric vehicle.

In this case, although water is supplied to the battery case at the outside of the electric vehicle, water may not be infiltrated into the battery module inside the battery case. In addition, a larger amount of time is spent until all battery modules are exploded and burnt. In addition, some of battery cells, which are not completely broken inside the battery pack, are ignited again when the electric vehicle is fired. Accordingly, a manner of coping with the fire accident of the electric vehicle is required.

### SUMMARY

Embodiments of the inventive concept provide an apparatus for extinguishing a fire of an electric vehicle, capable of rapidly and efficiently surpassing the fire when the fire occurs in the electric vehicle.

The technical problems to be solved by the inventive concept are not limited to the aforementioned problems, and any other technical problems not mentioned herein will be clearly understood from the following description by those skilled in the art to which the inventive concept pertains.

According to an exemplary embodiment, an apparatus for extinguishing a fire of an electric vehicle includes a waterway pipe that is provided on a cover of a battery pack mounted in the electric vehicle, and a fire water pipe that is provided outside the battery pack inside the electric vehicle, and has one end connected with the waterway pipe and an opposite end connected with a fire hose on a vehicle body of the electric vehicle.

The opposite end of the fire water pipe may be fixed to an inlet port provided in the vehicle body of the electric vehicle. The apparatus for extinguishing a fire of an electric vehicle may further include a connector that has one side connected with the opposite end of the fire water pipe at the inlet port and an opposite side connected with the fire hose.

The fire water pipe has a diameter smaller than a diameter of the fire hose, the one side of the connector may have a first diameter to be connected with the fire water pipe, and the opposite side of the connector may have a second diameter greater than the first diameter to be connected with the fire hose.

The waterway pipe may be provided inside the cover, and the fire water supplied from the fire hose may be introduced into the waterway pipe in the cover through the fire water pipe.

The apparatus for extinguishing a fire of an electric vehicle may further include an outlet port to discharge the fire water, which flows into the waterway pipe, to at least one battery module provided under the cover.

The waterway pipe may be provided to pass through an area corresponding to each battery module inside the cover.

The waterway pipe may be provided in a zig-zag pattern throughout a whole area of the cover, inside the cover.

The waterway pipe may include a first waterway pipe extending along a central axis of the cover in a lengthwise direction of the cover and having one end connected with the fire water pipe, a second waterway pipe communicating with an opposite end of the first waterway pipe, and provided to pass through all battery modules provided at the one side of the first waterway pipe, when viewed based on the first waterway pipe, and a third waterway pipe communicating with the opposite end of the first waterway pipe, and provided to pass through all battery modules provided at the opposite side of the first waterway pipe, when viewed based on the first waterway pipe.

The waterway pipe may be provided to form one space corresponding to a remaining area other than an edge area of the cover, inside the cover.

According to an exemplary embodiment, an electric vehicle may include a battery pack that is mounted in the electric vehicle and includes at least one battery module and a cover to cover the battery module, a waterway pipe that is provided on the cover, and a fire water pipe that is provided outside the battery pack inside the electric vehicle, and has one end connected with the waterway pipe and an opposite end connected with a fire hose on a vehicle body of the electric vehicle.

### BRIEF DESCRIPTION OF THE FIGURES

The above and other objects and features will become apparent from the following description with reference to the following figures, wherein like reference numerals refer to like parts throughout the various figures unless otherwise specified, and wherein:
FIG. 1 is a view schematically illustrating the configuration of an apparatus for extinguishing fire of an electric vehicle, according to an embodiment of the inventive concept;
FIG. 2 is a sectional view illustrating a battery pack cover, according to an embodiment of the inventive concept;
FIG. 3 is a view schematically illustrating a battery pack cover having a waterway pipe, according to an embodiment of the inventive concept;
FIGS. 4 to 6 are view schematically illustrating a battery pack having a waterway pipe formed according to another embodiment of the inventive concept;
FIG. 7 is a sectional view illustrating a battery pack cover, according to another embodiment of the inventive concept; and
FIG. 8 is a view schematically illustrating a battery pack cover having a waterway pipe, according to another embodiment of the inventive concept.

### DETAILED DESCRIPTION

Hereinafter, an embodiment of the inventive concept will be described in more detail with reference to the accompanying drawings. The embodiments of the inventive concept may be modified in various forms, and the scope of the inventive concept should not be construed to be limited by the embodiments of the inventive concept described in the following. The embodiments of the inventive concept are provided to describe the inventive concept for those skilled in the art more completely. Accordingly, the shapes and the like of the components in the drawings are exaggerated to emphasize clearer descriptions.

Hereinafter, the feature of the inventive concept will be described in detail with reference to exemplary embodiments and accompanying drawings to clarify solutions of problems to be solved according to the inventive concept. In the following description, the same reference numerals will be assigned to the same components even though the components are illustrated in different drawings. In addition, when the description is made with reference to a present drawing, a component in another drawing may be cited if necessary.

Meanwhile, the terms "up", "down", "one side", or "opposite side", which represents directionality, are used the orientations of accompanying drawings. According to an embodiment of the inventive concept, positions of components can be set in various orientations. Accordingly, the terms related to the directionality are provided for the convenience of example, but the inventive concept is not limited thereto.

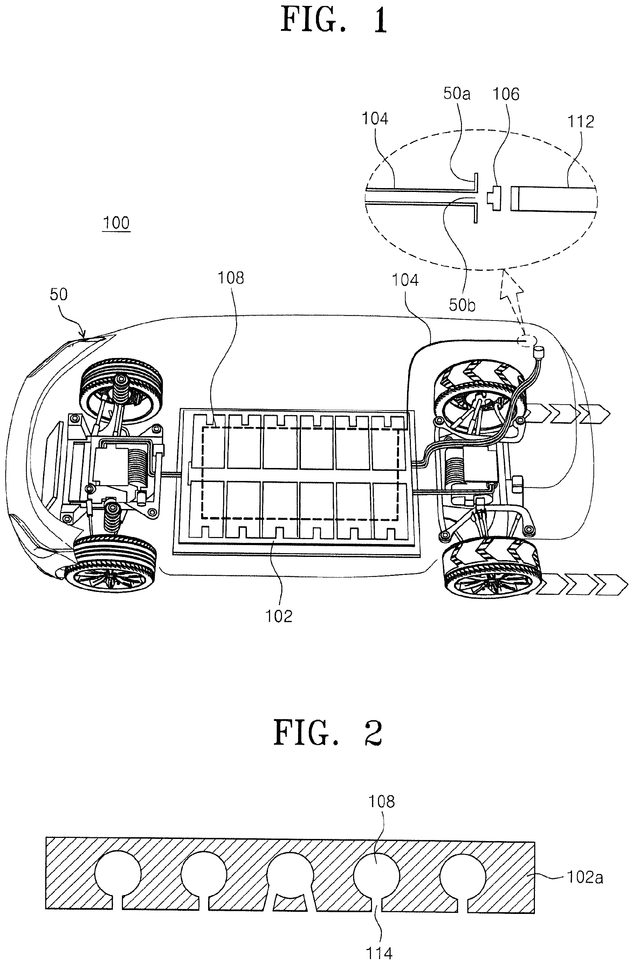

FIG. 1 is a view schematically illustrating the configuration of an apparatus for extinguishing fire of an electric vehicle, according to an embodiment of the inventive concept.

Referring to FIG. 1, an apparatus 100 for extinguishing fire of an electric vehicle may include a battery pack 102, a fire water pipe 104, and a connector 106.

The battery pack 102 is provided in an electric vehicle 50 to supply power to the electric vehicle 50. The battery pack 102, which is the final-stage form of a battery system mounted in the electric vehicle 50, includes a plurality of battery modules, a battery management system, a cooling system, and various control and protection systems. According to an embodiment, the battery pack 102 may be mounted on an interior floor of the electric vehicle 50, and the position of the battery pack 102 is not limited thereto.

In this case, a waterway pipe 108 is provided on a cover of the battery pack 102. The waterway pipe 108 is a passage provided to move fire water introduced from the outside. The waterway pipe 108 may be provided to introduce the fire water into each battery module inside the battery pack 102.

The fire water pipe 104 may be provided outside the battery pack 102 in the electric vehicle 50. One end of the fire water pipe 104 may be connected with the waterway pipe 108. The one end of the fire water pipe 104 may be connected with the waterway pipe 108 on the cover of the battery pack 102. An opposite end of the fire water pipe 104 may be connected with the connector 106. The opposite end of the fire water pipe 104 may be connected with the connector 106 on a vehicle body 50a of the electric vehicle 50.

An inlet port 50b may be provided in the vehicle body 50a of the electric vehicle 50 such that the opposite end of the fire water pipe 104 is fixed to the inlet port 50b. According to an embodiment, the inlet port 50b may be provided in the vicinity of a charging port of the electric vehicle 50, but the inventive concept is not limited thereto. The opposite end of the fire water pipe 104 may be exposed outside through the inlet port 50b. A cover (not illustrated) may be provided in the electric vehicle 50 to cover the inlet port 50b.

The connector 106 may be connected with the opposite end of the fire water pipe 104 in the vehicle body 50a of the electric vehicle 50. The connector 106 may be connected with the opposite end of the fire water pipe 104 through the inlet port 50b. In addition, the connector 106 may be connected with an external fire hose 112.

The connector 106 may be fixed in the state that the connector 106 is connected with the opposite end of the fire water pipe 104 in the vehicle body 50a of the electric vehicle 50, but the inventive concept is not limited thereto. For example, the connector 106 may be detachably provided in the vehicle body 50a of the electric vehicle 50. The connector 106 may connect the fire water pipe 104 with the fire hose 112 inside the electric vehicle 50.

In this case, the fire water pipe 104 may have a diameter smaller than a diameter of the fire hose 112. In other words, the fire water pipe 104 is received inside the electric vehicle 50. Accordingly, the fire water pipe 104 may be provided to have the diameter smaller than the diameter of the fire hose 112 to minimize the volume of the fire water pipe 104. Accordingly, one side of the connector 106 is provided to have a first diameter to be connected with the fire water pipe 104, and an opposite side of the connector 106 may be provided to have a second diameter greater than the first diameter such that the opposite end of the connector 106 is connected with the fire hose 112.

According to an embodiment, the waterway pipe 108 is provided on the cover of the battery pack 102 and connected with the fire hose 112 through the fire water pipe 104, to directly supply the fire water, which flows through the fire hose 112, to the battery pack 102. In addition, the fire water supplied to the battery pack 102 is sprayed to the battery module through the waterway pipe 108, thereby effectively suppressing the fire.

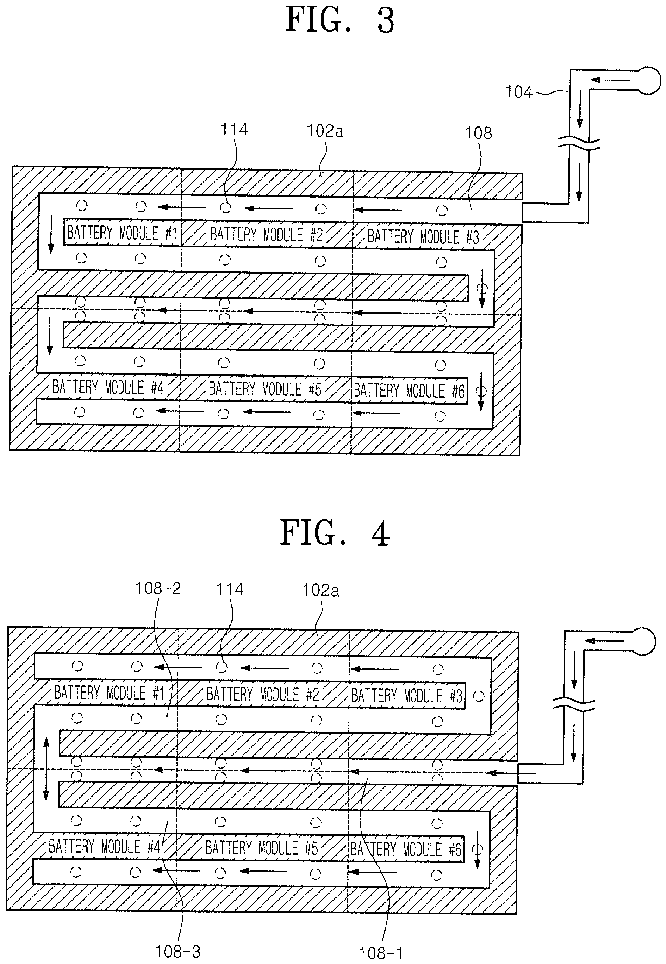

FIG. 2 is a sectional view illustrating a battery pack cover, according to an embodiment of the inventive concept, and FIG. 3 is a view schematically illustrating a battery pack cover having a waterway pipe, according to an embodiment of the inventive concept. In this case, six battery modules are provided in the battery pack by way of example,

Referring to FIGS. 2 and 3, a cover 102a of the battery pack 102 is provided to cover a plurality of battery modules 102b, on the plurality of battery modules 102b. The waterway pipe 108 is formed inside the cover 102a. The diameter of the waterway pipe 108 may be provided to be less than the thickness of the cover 102a. The waterway pipe 108 may be provided at the central portion of the cover 102a in a thickness direction of the cover 102a.

The waterway pipe 108 may be provided in a lengthwise direction and a widthwise direction. The waterway pipe 108 may be provided to pass through an area corresponding to the battery module 102b. In other words, the waterway pipe 108 may be provided inside the cover 102a to pass through all battery modules of the battery pack 102.

According to an embodiment, the waterway pipe 108 may be provided inside the cover 102a to have in a zig-zag pattern throughout the whole area of the cover 102a. FIG. 3 illustrates the waterway pipe 108 provided in the zig-zag pattern from a right-upper end of the cover 102a to a left-lower end of the cover 102a.

In addition, the cover 102a may have an outlet port 114 to discharge the fire water flowing through the waterway pipe 108 to the battery module. One end of the outlet port 114 is provided to communicate with the waterway pipe 108. An opposite end of the outlet port 114 is provided to communicate with the battery module. A plurality of outlet ports 114 are provided in the area corresponding to one battery module. In this case, the fire water is directly discharged and sprayed to the battery module through the outlet port 114, such that the fire water is filled in the battery pack 102. Accordingly, a fire occurring inside the battery pack 102 may be effectively suppressed. The fire water may include salt water by way of example, but the inventive concept is not limited thereto.

One end of the waterway pipe 108 may be provided to be exposed to the outside through an outer surface of the cover 102a. The one end of the waterway pipe 108 may be connected with the fire water pipe 104. In this case, the opposite end of the fire water pipe 104 is connected with the fire hose 112 through the connector 106. In this case, the fire water supplied through the fire hose 112 is sprayed to the outlet port 114 through the fire water pipe 104 and the waterway pipe 108.

The fire water introduced into the one end of the waterway pipe 108 flows in a zig-zag manner along the waterway pipe 108. In this case, the waterway pipe 108 is provided to pass through all battery modules 102b of the battery pack 102. Accordingly, the fire water is sprayed to all battery modules 102b through outlet ports 114 positioned all over the battery pack 102 while flowing through the waterway pipe 108.

FIGS. 4 to 6 are view schematically illustrating a battery pack having a waterway pipe formed according to another embodiment of the inventive concept.

Referring to FIG. 4, the waterway pipe 108 may include a first waterway pipe 108-1, a second waterway pipe 108-2, and a third waterway pipe 108-3. The first waterway pipe 108-1 may extend along a central axis of the cover 102a in a lengthwise direction of the cover 102a. One end of the first waterway pipe 108-1 may be provided to be exposed through the outer surface of the cover 102a. The one end of the first waterway pipe 108-1 may be connected with the fire water pipe 104.

The second waterway pipe 108-2 may be provided to communicate with an opposite end of the first waterway pipe 108-1. The second waterway pipe 108-2 may be provided at one side of the opposite end of the first waterway pipe 108-1. The second waterway pipe 108-2 may be provided to pass through all battery modules provided at the one side of the first waterway pipe 108-1, when viewed based on the first waterway pipe 108-1. For example, the second waterway pipe 108-2 may be provided in the zig-zag pattern.

The third waterway pipe 108-3 may be provided to communicate with the opposite end of the first waterway pipe 108-1. The third waterway pipe 108-3 may be provided at opposite side of the opposite end of the first waterway pipe 108-1. The third waterway pipe 108-3 may be provided to pass through all battery modules provided at the opposite side of the first waterway pipe 108-1, when viewed based on the first waterway pipe 108-1. For example, the third waterway pipe 108-3 may be provided in the zig-zag pattern. The third waterway pipe 108-3 may be provided symmetrically to the second waterway pipe 108-2, but the inventive concept is not limited thereto.

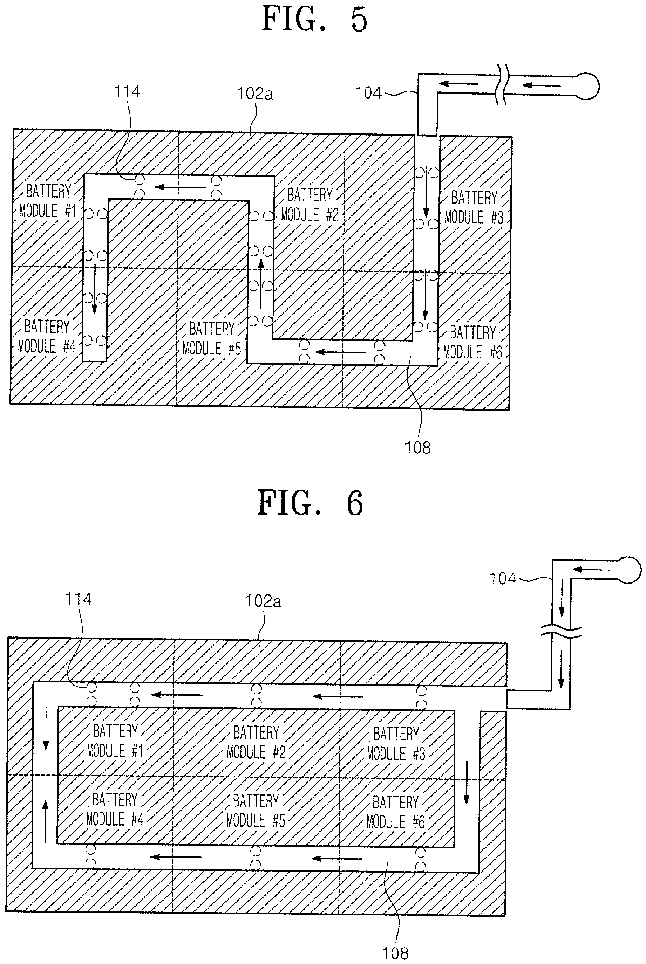

FIG. 5 illustrates the waterway pipe 108 provided in the zig-zag pattern from a right-upper end of the cover 102a to a left-lower end of the cover 102a, according to another embodiment. In addition, the waterway pipe 108 may be provided in various patterns to pass through all battery modules.

Referring to FIG. 6, the waterway pipe 108 may be provided in a rectangular shape to pass through all battery modules.

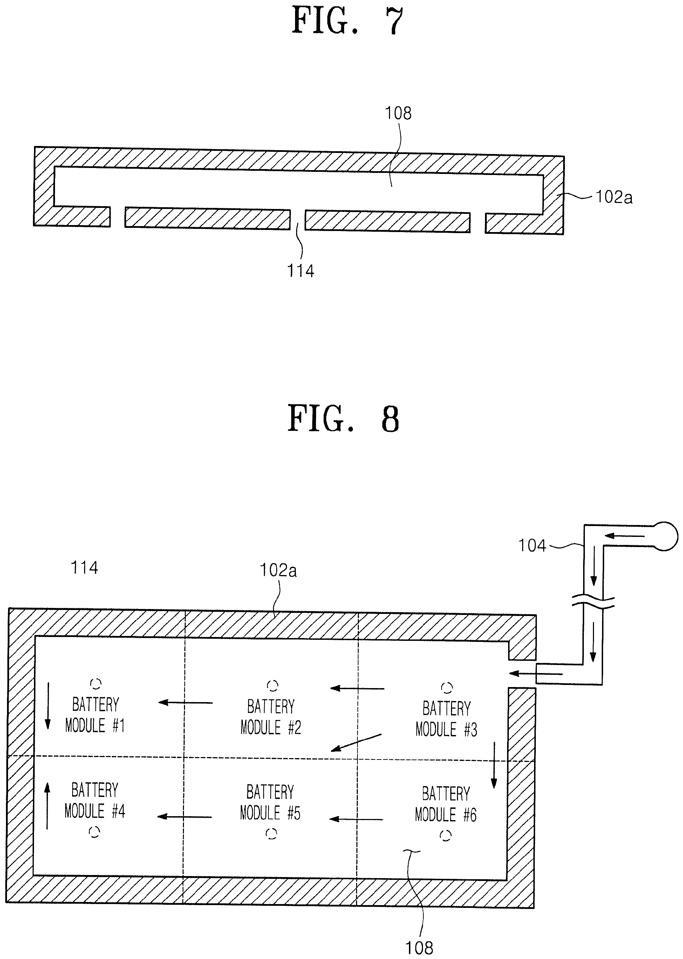

FIG. 7 is a sectional view illustrating a battery pack cover, according to another embodiment of the inventive concept, and FIG. 8 is a view schematically illustrating a battery pack cover having a waterway pipe, according to another embodiment of the inventive concept.

Referring to FIGS. 7 and 8, the waterway pipe 108 may be provided in a remaining area of the cover 102a other than an edge area of the cover 102a, inside the cover 102a. In other words, the waterway pipe 108 may be provided to form one space corresponding to the remaining area of the cover 102a other than the edge area of the cover 102a, inside the cover 102a.

One end of the waterway pipe 108 is provided to be exposed to the outside through the outer surface of the cover 102a, and connected with the fire water pipe 104. In addition, a plurality of outlet ports 114 may be provided in the cover 102a. At least one outlet port 114 may be provided to correspond to each battery module.

According to embodiments of the inventive concept, the waterway pipe is formed on the cover of the battery pack, and connected with the fire hose through the fire water pipe. Accordingly, the fire water flowing through the fire hose may be directly supplied to the battery pack. The fire water supplied into the battery pack is sprayed to each battery module through the waterway pipe. Accordingly, the fire may be effectively surpassed.

The effects of the inventive concept are not limited to the above, but other effects, which are not mentioned, will be apparently understood to those skilled in the art.

The above description has been made for the illustrative purpose. Furthermore, the above-mentioned contents describe the exemplary embodiment of the inventive concept, and the inventive concept may be used in various other combinations, changes, and environments. That is, the inventive concept can be modified and corrected without departing from the scope of the inventive concept that is disclosed in the specification, the equivalent scope to the written disclosures, and/or the technical or knowledge range of those skilled in the art. The written embodiment describes the best state for implementing the technical spirit of the inventive concept, and various changes required in the detailed application fields and purposes of the inventive concept can be made. The written embodiment describes the best state for implementing the technical spirit of the inventive concept, and various changes required in the detailed application fields and purposes of the inventive concept can be made. Furthermore, it should be construed that the attached claims include other embodiments.

While the inventive concept has been described with reference to exemplary embodiments, it will be apparent to those skilled in the art that various changes and modifications may be made without departing from the spirit and scope of the inventive concept. Therefore, it should be understood that the above embodiments are not limiting, but illustrative.

## Claims

1. An apparatus for extinguishing a fire of an electric vehicle, the apparatus comprising:
a waterway pipe provided on a cover of a battery pack mounted inside the electric vehicle; and
a fire water pipe provided outside the battery pack inside the electric vehicle, and having one end connected with the waterway pipe and an opposite end connected with a fire hose on a vehicle body of the electric vehicle.

2. The apparatus of claim 1, wherein the opposite end of the fire water pipe is fixed to an inlet port provided in the vehicle body of the electric vehicle, and
wherein the apparatus for extinguishing the fire of the electric vehicle further includes:
a connector having one side connected with the opposite end of the fire water pipe at the inlet port and an opposite side connected with the fire hose.

3. The apparatus of claim 2, wherein the fire water pipe has a diameter smaller than a diameter of the fire hose, and
wherein the one side of the connector has a first diameter to be connected with the fire water pipe, and the opposite side of the connector has a second diameter greater than the first diameter to be connected with the fire hose.

4. The apparatus of any of claims 1-3, wherein the waterway pipe is provided inside the cover, and fire water supplied from the fire hose is introduced into the waterway pipe, which is provided inside the cover, through the fire water pipe.

5. The apparatus of claim 4, further comprising:
an outlet port to discharge the fire water, which flows into the waterway pipe, to at least one battery module provided under the cover.

6. The apparatus of claim 5, wherein the waterway pipe is provided to pass through an area corresponding to each battery module inside the cover.

7. The apparatus of claim 6, wherein the waterway pipe is provided in a zig-zag pattern throughout a whole area of the cover, inside the cover.

8. The apparatus of claim 6, wherein the waterway pipe includes:
a first waterway pipe extending along a central axis of the cover in a lengthwise direction of the cover and having one end connected with the fire water pipe;
a second waterway pipe communicating with an opposite end of the first waterway pipe, and provided to pass through all battery modules provided at one side of the first waterway pipe, when viewed based on the first waterway pipe; and
a third waterway pipe communicating with the opposite end of the first waterway pipe, and provided to pass through all battery modules provided at an opposite side of the first waterway pipe, when viewed based on the first waterway pipe.

9. The apparatus of claim 5, wherein the waterway pipe is provided to form one space corresponding to a remaining area other than an edge area of the cover, inside the cover.

10. An electric vehicle comprising:
a battery pack mounted in the electric vehicle and including at least one battery module and a cover to cover the battery module; and
an apparatus according to any of claims 1 to 9.
